# EUROPEAN PATENT SPECIFICATION

(11) **EP 3 133 795 B1**
(45) Date of publication and mention of the grant of the patent: **19.06.2019**
(21) Application number: 16175663.0
(22) Date of filing: 22.06.2016
(51) Int. Cl.: H04L 12/437, H04L 12/721, H04W 72/04, H04L 29/08, H04W 4/80

(54) **NETWORK DEVICE AND METHOD FOR METADATA DISTRIBUTION IN A NETWORK**
NETZWERKGERÄT UND VERFAHREN FUR METADATENVERTEILUNG IN EINEM NETZWERK
DISPOSITIF RÉSEAU ET PROCÉDÉ POUR DISTRIBUTION DE MÉTADONNÉES DANS UN RÉSEAU

(30) Priority: 17.08.2015 US 201514828338
(43) Date of publication of application: 22.02.2017
(73) Proprietor: Harman International Industries, Incorporated, Stamford, CT 06901 (US)
(72) Inventor: DAVIS, John Foster, Sandy, UT 84092 (US)
(74) Representative: Grünecker Patent- und Rechtsanwälte PartG mbB

(56) References cited:
- EP-A2- 1 482 664
- US-A1- 2009 232 326
- US-A1- 2012 070 004

## Description

### FIELD

The disclosure relates to passing metadata in a network having a BLU link V2 or other ring-based topology.

### BACKGROUND

Data networks may be configured with many different topologies. Each type of topology may provide different advantages and challenges with respect to routing data through the network. For example, a star-shaped topology may provide fast simultaneous transmissions to multiple devices, but may rely on a single transmitting device that causes heavy network disruptions upon failure. A ring-shaped topology may allow for redundancy in pathing (e.g., data may be sent in two directions to accommodate disruptions in the network), but may result in longer data propagation times and the potential for bottlenecks as data is sent through intermediate devices in the ring.

Patent application publication US 2009/232326 A1 describes a digital audio distribution network that includes a plurality of nodes and at least one transmission line that interconnects the nodes to form the digital audio distribution network. A first node in the plurality of nodes receives a user command, encodes the user command, and sends the encoded user command and digital audio over the transmission line. A second node in the plurality of nodes receives the encoded user command and the digital audio over the transmission line.

Patent application publication US 2012/070004 A1 describes a master transmitter that distributes a plurality of audio channels to one or more expansion receivers as a multiplexed audio stream. Control information is also transmitted between the master transmitter and the expansion receivers. Both the control information and the multiplexed audio stream are transmitted on the same cable allowing for reduced clutter and cheaper material and installation costs.

Patent application publication EP 1 482 664 A2 describes a signal transmission apparatus that is connected to a network as one node among a plurality of nodes involved in the network which is provided with an audio signal transmission period for transmitting a plurality of channels of audio signals each transmission cycle and a control data transmission period for transmitting control data of the plurality of the nodes each control cycle by using an idle time period other than the audio signal transmission period. In the signal transmission apparatus, a storage section stores configuration information of the one node. A transmitting section transmits the control data including an error checking code of the configuration information. A receiving section receives request data from another node, the request data requesting the one node for transmission of an information block of the configuration information. A control section controls the transmitting section to transmit the information block in response to the request data.

### SUMMARY OF THE INVENTION

It is an object of the present invention to provide network devices in a daisy-chain or ring network, and a method of transmitting metadata in a daisy-chain or ring audio network, on an audio device, that obviate or mitigate at least one of the disadvantages and shortcomings of the related prior art.

This object is solved by the present invention as claimed in the appended independent claims. Particular embodiments of the present invention are defined by the appended dependent claims.

Embodiments are disclosed for network devices and metadata transmission/receipt in a network. In a comparative example useful for understanding the present invention, a network device in a daisy-chain or ring network includes a network interface device, a processor, and a storage device storing instructions executable by the processor to allocate a channel in the network as a metadata channel, and synchronize with each other device in the network. The instructions are further executable to insert metadata into a metadata packet, and transmit the metadata packet on the allocated metadata channel alongside content transmitted on remaining channels of the network.

In another comparative example useful for understanding the invention, a network device in a daisy-chain or ring network includes a network interface device, a processor, and a storage device storing instructions executable by the processor to synchronize with each other device in the network to receive an indication of an allocated metadata channel. The instructions are further executable to receive a metadata packet on the allocated metadata channel, and perform an action based on the received metadata packet.

In a comparative example useful for understanding the invention, on an audio device, an example method of transmitting metadata in a daisy-chain or ring audio network includes allocating a channel in the audio network as a metadata channel, synchronizing with each other device in the audio network, transmitting a first metadata packet including a first type of metadata on the allocated metadata channel, and transmitting a first frame of audio content on remaining channels of the audio network concurrently to transmitting the first metadata packet on the allocated metadata channel. The example method further includes detecting a trigger to change metadata transmission, transmitting a second metadata packet including a second type of metadata on the allocated metadata channel, and transmitting a second frame of audio content on the remaining channels of the audio network concurrently to transmitting the second metadata packet on the allocated metadata channel.

### BRIEF DESCRIPTION OF THE DRAWINGS

The disclosure may be better understood from reading the following description of non-limiting embodiments, with reference to the attached drawings, wherein below:
FIG. 1 shows an example interior of a vehicle cabin in accordance with one or more embodiments of the present disclosure;
FIG. 2 shows an example daisy-chain network in accordance with one or more embodiments of the present disclosure;
FIG. 3 shows a flow chart of an example method for sending metadata in a network utilizing a daisy-chain and/or ring network topology in accordance with one or more embodiments of the present disclosure;
FIG. 4 shows a flow chart of an example method for dynamically updating the type of metadata transmitted on an allocated metadata channel in accordance with one or more embodiments of the present disclosure; and
FIG. 5 shows a flow chart of an example method for receiving metadata on an allocated channel in accordance with one or more embodiments of the present disclosure.

### DETAILED DESCRIPTION

Data networks may be used to send various types of data. For example, a data network may include audio devices and be configured to send audio data (e.g., from an audio source, such as a mixer, an audio/video receiver, an audio content storage device, etc., to an audio output device, such as a speaker, or other audio sink). However, information other than the audio data (or other primary content) may be transmitted in the network. For example, metadata may be transmitted with audio data (or other primary content) in order to describe features of the audio data/network/network devices and/or provide other useful information.

In some example networks, such as Ethernet networks, metadata may be transmitted via packets (e.g., Ethernet packets). While such techniques may be operable on certain topologies, sending metadata in separate packets (e.g., separate from audio data or other content being distributed) may cause bottlenecks or other network disruptions in topologies such as ring networks (e.g., networks with daisy-chained intermediate devices). An example ring network topology includes BLU link V2. In order to provide metadata in networks having ring/daisy-chain topologies (such as BLU link V2), the present disclosure provides systems and methods for allocating a chunk of a packet that is available for a single device to transmit onto at any one time, thereby creating a "metadata channel" in a stream of data (e.g., audio data) that allows metadata to be transmitted at regular intervals (e.g., once every 192kHz frame).

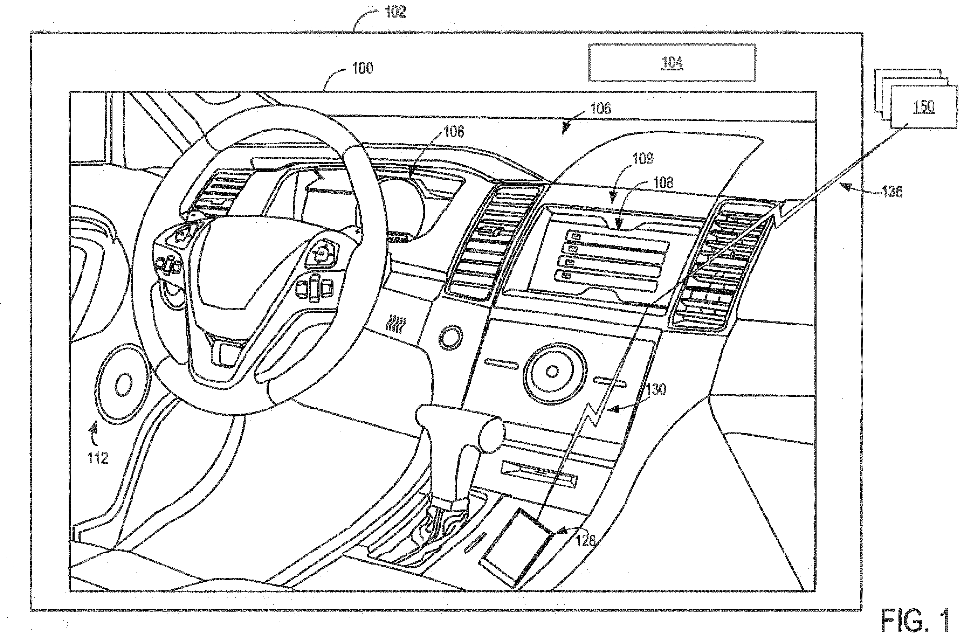

FIG. 1 shows an example partial view of one type of environment for a communication system including a ring/daisy-chained network topology: an interior of a cabin 100 of a vehicle 102, in which a driver and/or one or more passengers may be seated. Vehicle 102 of FIG. 1 may be a motor vehicle including drive wheels (not shown) and an internal combustion engine 104. Internal combustion engine 104 may include one or more combustion chambers which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a driver (also referred to as the user) of vehicle 102. For example, instrument panel 106 may include a touch screen 108 of an in-vehicle computing system 109 (e.g., an infotainment system), an audio system control panel, and an instrument cluster 110. While the example system shown in FIG. 1 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, etc. The audio system controls may include features for controlling one or more aspects of audio output via speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), etc., based on user input received directly via touch screen 108, or based on data regarding the user (such as a physical state and/or environment of the user) received via external devices 150 and/or mobile device 128. Each of the speakers 112 may be connected in an audio network having a ring/daisy-chain topology, such as BLU link V2. Accordingly, audio data may be transmitted from the in-vehicle computing system 109 to each of the speakers via the ring/daisy-chain network (e.g., data is transmitted from the in-vehicle computing system to a first speaker, then propagated from the first speaker to a second speaker, etc.).

In some embodiments, one or more hardware elements of in-vehicle computing system 109, such as touch screen 108, a display screen, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of the in-vehicle computing system may be modular and may be installed in multiple locations of the vehicle.

The cabin 100 may include one or more sensors for monitoring the vehicle, the user, and/or the environment. For example, the cabin 100 may include one or more seat-mounted pressure sensors configured to measure the pressure applied to the seat to determine the presence of a user, door sensors configured to monitor door activity, humidity sensors to measure the humidity content of the cabin, microphones to receive user input in the form of voice commands, to enable a user to conduct telephone calls, and/or to measure ambient noise in the cabin 100, etc. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, etc. Information regarding ambient conditions of the vehicle, vehicle status, or vehicle driver may also be received from sensors external to/separate from the vehicle (that is, not part of the vehicle system), such as from sensors coupled to external devices 150 and/or mobile device 128.

Cabin 100 may also include one or more user objects, such as mobile device 128, that are stored in the vehicle before, during, and/or after travelling. The mobile device may include a smart phone, a tablet, a laptop computer, a portable media player, and/or any suitable mobile computing device. The mobile device 128 may be connected to the in-vehicle computing system via communication link 130. The communication link 130 may be wired (e.g., via Universal Serial Bus [USB], Mobile High-Definition Link [MHL], High-Definition Multimedia Interface [HDMI], etc.) or wireless (e.g., via BLUETOOTH, WI-FI, Near-Field Communication [NFC], cellular connectivity, etc.) and configured to provide two-way communication between the mobile device and the in-vehicle computing system. For example, the communication link 130 may provide sensor and/or control signals from various vehicle systems (such as vehicle audio system, climate control system, etc.) and the touch screen 108 to the mobile device 128 and may provide control and/or display signals from the mobile device 128 to the in-vehicle systems and the touch screen 108. The communication link 130 may also provide power to the mobile device 128 from an in-vehicle power source in order to charge an internal battery of the mobile device.

In-vehicle computing system 109 may also be communicatively coupled to additional devices operated and/or accessed by the user but located external to vehicle 102, such as one or more external devices 150. In the depicted embodiment, external devices 150 are located outside of vehicle 102 though it will be appreciated that in alternate embodiments, external devices may be located inside cabin 100. The external devices may include a server computing system, personal computing system, portable electronic device, electronic wrist band, electronic head band, portable music player, electronic activity tracking device, pedometer, smart-watch, GPS system, etc. External devices 150 may be connected to the in-vehicle computing system via communication link 136 which may be wired or wireless, as discussed with reference to communication link 130, and configured to provide two-way communication between the external devices and the in-vehicle computing system, For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences, operating rules, etc. and may transmit such information from the external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by the mobile device 128 and/or the external devices 150.

In some embodiments, one or more of the external devices 150 may be communicatively coupled to in-vehicle computing system 109 indirectly, via mobile device 128 and/or another of the external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128, the aggregated data then transmitted to in-vehicle computing system 109 and touch screen 108 via communication link 130. Similar data aggregation may occur at a server system and then transmitted to in-vehicle computing system 109 and touch screen 108 via communication link 136/130.

In the example environment illustrated in FIG. 1, the in-vehicle computing system 109 may be connected to one or more vehicle systems, such as speakers 112, display 108, vehicle sensors, and/or other suitable vehicle systems via any suitable network. In some examples, the in-vehicle computing system 109 includes a talker and/or transmitting/source device configured to transmit audio/video data to listener and/or receiving/sink devices, such as speakers 112 and display 108 via a network. The network may be configured in accordance with Layer 2 of the Open Systems Interconnection (OSI) model, in which routing and forwarding decisions or determinations in the network may be performed on a media access control (MAC) addressing basis. An example Layer 2 network may be an Ethernet Audio/Video Bridging (AVB) network. For Layer 2 networks configured as AVB networks, the talkers and the listeners may be configured to communicate over the AVB network using various AVB standards and protocols, including the Institute of Electrical and Electronics Engineers (IEEE) 802.1AS-2011 (gPTP) for network timing and synchronization, IEEE 802.1Q-2011 clause 34 for queuing and forwarding streaming data, IEEE 802.1Q-2011 clause 35 (Stream Reservation Protocol (SRP)) for reserving a network connection or path and/or resources such as bandwidth for communication over the network connection, and/or IEEE 1722-2011/1722a related to a possible data streaming format. Other AVB-related standards and protocols, and/or other versions of the AVB standards and protocols, previously, currently, or later developed, may also or alternatively be used.

In additional or alternative examples, devices in the vehicle may be connected via a network with BLU link V2 topology. For example, a BLU link V2 topology may be based on Gigabit Ethernet technology and use CAT5e or similar cabling (e.g., with fiber converters in some examples) to provide data throughout the network. In some examples, 24-bit data may be distributed via 256 channels at 48kHz or 128 channels at 96kHz. In other examples, data may be distributed at 192kHz. As will be discussed in more detail below, the disclosure provides for allocating a chunk of a BLU link V2 packet that is available for a single device to transmit onto at any one time. This allocation allows one of 1024 meta channels to be transmitted with each 192kHz audio frame (BLU link V2 may send audio in bundles of 180 channels per packet at 192kHz, giving it 720 discrete channels at 48kHz). Thus, the metadata channel may be "open" once every 192kHz frame. The metadata channel may be 16 bytes wide, so this translates to 16 bytes x 192kHz / 1024 = 24kbaud. Providing metadata at 24kbaud provides enough bandwidth for transmitting simple text and/or other data formats that may be included in the metadata.

BLU link ports (e.g., on devices in the network) are to be connected to other BLU link ports (e.g., instead of Ethernet switches, for example). The BLU link ports of network devices may be connected to one another in a ring and/or daisy-chain configuration, such that network devices propagate data to a next network device in the chain/ring. BLU link V2 topologies may be used in Audio/Video Bridging (AVB), CobraNet, and/or DANTE networks, however all devices on a particular BLU link ring/chain are to be connected to a single AVB, CobraNet, or DANTE network.

The in-vehicle computing system may stream audio/video data based on information stored in local storage and/or audio/video data received from mobile device 128 and/or external device(s) 150. Presenting the audio/video data via the speakers 112 and display 108 in accordance with a presentation time included in packets of the audio/video data stream even when packets are lost during transmission may ensure that the audio output at the speakers matches the video output at the display (e.g., without lip-sync error that arises from audio that leads video and/or video that leads audio) and that any disruptions in the audio/video stream are minimized.

It is to be understood that FIG. 1 depicts one example environment, however the communication systems and methods described herein may be utilized in any suitable environment. As another example, speakers in a professional audio environment (e.g., an arena, stadium, concert hall, amphitheater, recording studio, etc.) may be utilized as receivers that receive audio data originating From a transmitting device (e.g., a mixing console, audio/video receiver, etc.) over an AVB or other network. Any suitable devices that transmit and/or receive data may be utilized as the systems and/or to perform the methods described herein.

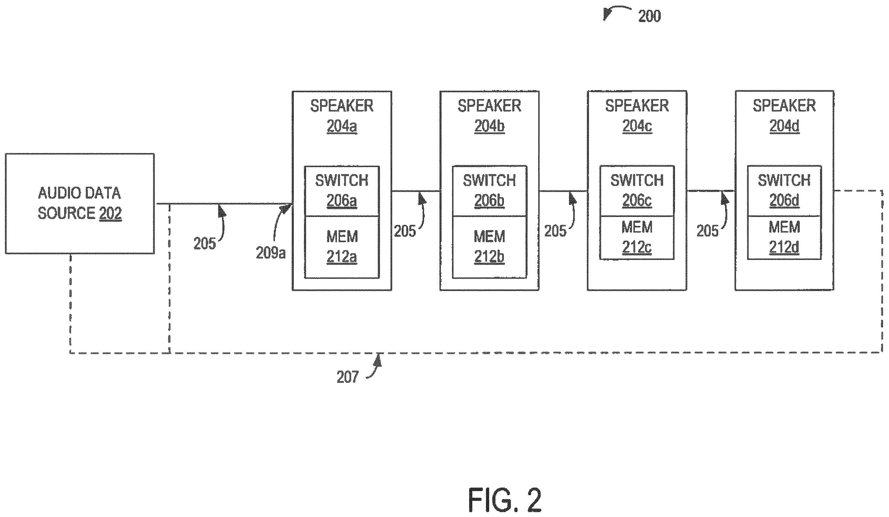

FIG. 2 shows an example daisy-chain network 200 including a content source device (e.g., audio data source 202) and a plurality of output devices (e.g., speakers 204a-204d). Each speaker may exhibit switch behavior in the illustrated example, as each speaker may include a network interface device such as switch 206a-206d for receiving and propagating data. The switch 206a-206d in each speaker may include a network card for communicating via a particular type of network (e.g., AVB, CobraNet, DANTE, etc.). The speakers may be clocked by a local media clock that controls timing (e.g., clocked events, timestamping, buffering, playback, etc.) on the speaker, Each speaker may receive its clock from the network card (e.g., from a master device on the network) and/or otherwise be synchronized to the master device on the network. The speakers may include one or more logic devices and storage devices (e.g., processors and memory) for storing and executing stored instructions to process incoming data, allocate resources for incoming streams, etc.

As shown, the speakers may be arranged in a daisy chain configuration such that the speakers are communicatively connected to propagate data to a next speaker in the chain and/or to receive data from a prior speaker in the chain based on the location of the speaker within the chain. The speakers may be connected to one another and the audio data source via any suitable wired or wireless communication link 205, including but not limited to Ethernet, WiFi, BLUETOOTH, etc. For example, each speaker may include input and output BLU link V2 ports respectively configured to receive and transmit data signals from one or more data sources, other speakers, and/or other suitable devices, In some embodiments, a first speaker in a daisy chain may be connected to an audio data source via a different type of communication link than the communication links between the speakers. As shown via wireless link 207, the speakers may be arranged in a ring formation, such that a "last" speaker in a daisy chain is communicative connected to a "first" speaker in the daisy chain and/or to an audio data source, noting that the "first" and "last" designations are used herein to differentiate placements in the chain and not to identify terminating devices in the chain. It is to be understood that the illustrated configuration (e.g., physical layout, communication links, etc.) is exemplary and any suitable configuration of transmitters and receivers may be utilized to provide the communication described herein.

Upon determining that a data stream is available for propagation to the speakers, audio data source 202 may transmit a packet along a communication link 205 to speaker 204a. Each speaker may serve as a node (e.g., an intermediate device) or a switch/bridge along the path of the data stream. In some examples, data may be able to travel in two directions across the ring/chain of speakers. For example, if a break occurs in the communication link between speaker 204b and speaker 204c, data traveling in the direction from speaker 204b to speaker 204c may be rerouted to travel from speaker 204b to speaker 204c via speakers 204a and 204d, in that order.

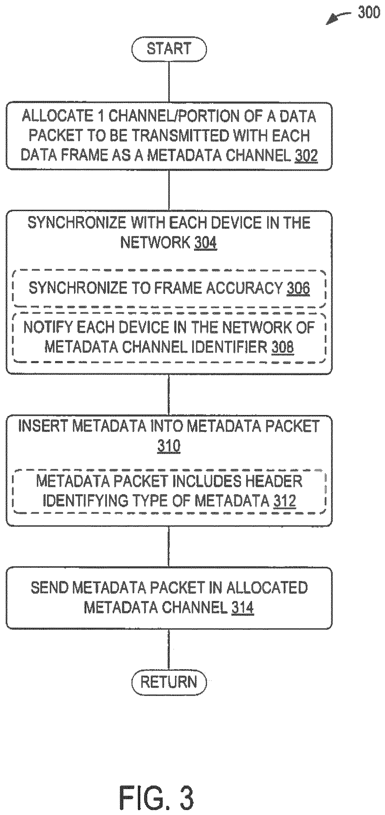

FIG. 3 is a flow chart of a method 300 for sending metadata in a network utilizing a daisy-chain and/or ring network topology, such as BLU link V2. Method 300 may be performed by any suitable network device, including a switch or other network interface of an audio device (e.g., a mixer, an audio/video receiver, a content source device, a speaker, etc.). For example, method 300 may be performed by audio data source 202 of FIG. 2 in some examples. In some examples, portions of method 300 may only be performed by a master or controlling device in the network, while other portions of method 300 may be performed by any device in the network. For example, there may be only one device on the network responsible for generating audio for a particular BLU link V2 audio channel, and it is this device that is also responsible for generating the corresponding metadata channel. In other examples, all devices in a network may selectively perform the method 300 based on conditions of the network and/or devices.

At 302, method 300 includes allocating one channel and/or portion of a data packet to be transmitted with each data frame (e.g., audio frame) as a metadata channel. At 304, the method includes synchronizing with each device in the network, For example, such synchronization may include synchronizing to frame accuracy (e.g., ensuring that each device is synchronized with one another at a frame level, such that each frame of data, audio data for example, is played back at the same time at each device in the network), as indicated at 306. As further indicated at 308, the synchronization may include notifying each device in the network of a metadata channel identifier (e.g., identifying the channel that metadata will occupy on future transmissions). In this way, every node (e.g., audio device) of the network may be in lock-step with all other nodes.

At 310, method 300 includes inserting metadata into a metadata packet. For example, the metadata may be a packet in itself, such that the metadata has a header attached to identify what type of metadata and/or content data is being transmitted (e.g., channel name, source IP address, control, etc.), as indicated at 312. At 314, the method includes sending the metadata packet in the allocated metadata channel.

By sending the metadata in a packet on an allocated channel, sending devices may be able to dynamically alter the metadata being sent alongside of sending content data. For example, sending devices may send a channel name every 5 seconds (or other suitable duration) and send control information the rest of the time. In other words, the metadata channel is dynamic and may be continually updated by the sending device. All other receiving devices may look at this data for every metadata channel. This may allow a mixing desk, for example, to pick up the channel of every one of the 720 audio channels being sent thereto from hundreds of different sending devices on the BLU link V2 (or other daisy-chain/ring topology) link.

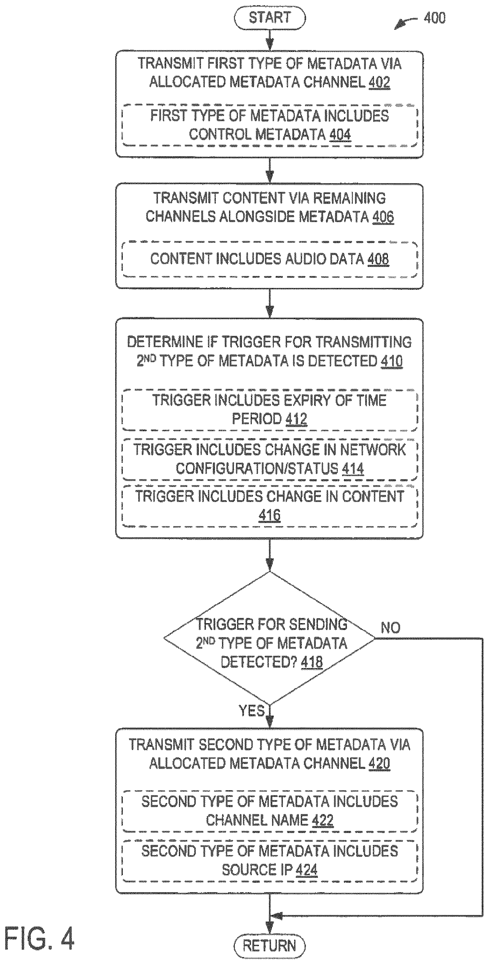

FIG. 4 is a flow chart of a method 400 for dynamically updating the type of metadata transmitted on an allocated metadata channel. For example, method 400 may be performed by any network device, such as any of the speakers of FIG. 2. At 402, method 400 includes transmitting a first type of metadata via the allocated metadata channel. The first type of metadata may optionally include control metadata, as indicated at 404. At 406, the method includes transmitting content via the remaining channels (e.g., remaining channels of bandwidth for the network) alongside (e.g., concurrently to) the metadata. The content may include audio data, as indicated at 408.

At 410, method 400 includes determining if a trigger for transmitting a second, or different, type of metadata is detected. For example, the trigger may be time-based and include an expiry of a time period, as indicated at 412. As discussed above, a device may be configured to send an update to a channel name periodically (e.g., every 5 seconds) in order to ensure that newly added devices stay up to date and/or to propagate changes in the network to connected devices on a regular basis (e.g., instead of only dispersing such information at an initial setup time). As indicated at 414, the trigger may additionally or alternatively include a change in network configuration/status and/or a change in content, as indicated at 416. For example, a change in network configuration/status may include an addition of a network device to the network, a removal of a network device from the network, a change in status of a network device in the network, an error in the network, a change in available bandwidth/data sent via the network, and/or any other suitable changes to the network and associated devices and data. A change in content may include sending different content, sending a different amount of content, sending a different type of content, an error in the content (e.g., a data error and/or a transmission error), a change in content source, and/or any other suitable changes to the content being transmitted.

At 418, the detection of the trigger is evaluated to determine a course of action, If a trigger for sending a second type of metadata is detected (e.g., "YES" at 418), the method proceeds to 420 to transmit the second type of metadata via the allocated metadata (e.g., to switch the metadata on the metadata channel to the second type). As indicated at 422, the second type of metadata may include a channel name or a source IP address, as indicated at 424. The second type of metadata may be transmitted continuously until another trigger is received to change the type of metadata in some examples. In other examples, the second type of metadata may be transmitted for one audio frame and/or until all of the available/scheduled/updated data of that type has been transmitted, and then the device may resume sending the first type of metadata on the allocated metadata channel. Returning to 418, if a trigger for sending the second type of metadata is not detected (e.g., "NO" at 418), the method returns to continue sending the first type of metadata in the allocated metadata channel,

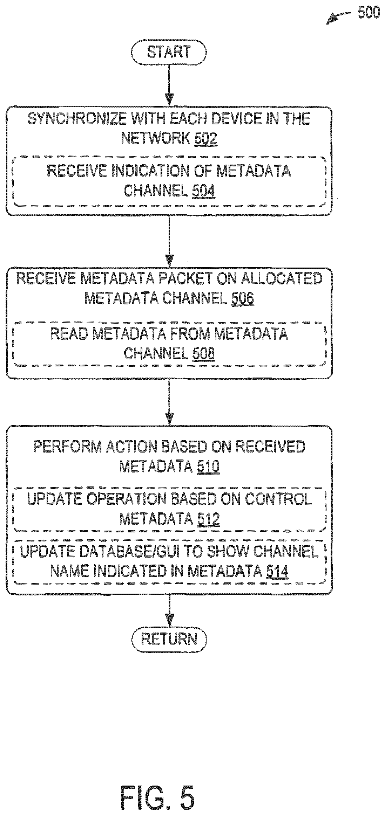

FIG. 5 is a flow chart for a method 500 of receiving metadata via an allocated metadata channel. For example, method 500 may be performed by any of the speakers of FIG. 2. At 502, method 500 includes synchronizing with each device in the network. For example, synchronizing may include receiving an indication of an allocated metadata channel on which metadata will be received, as indicated at 504. At 506, the method includes receiving a metadata packet on the allocated metadata channel. As indicated at 508, the method may include reading the metadata from the metadata channel (e.g., transferring the metadata into a local storage device and/or buffer for further analysis and/or processing). It is to be understood that content data (e.g., audio data) may be received alongside the metadata in other channels.

At 510, method 500 includes performing an action based on the received metadata. For example, an operation of the receiving device may be updated based on control metadata received via the allocated metadata channel, as indicated at 512. As another example, a database and/or graphical user interface (e.g., displayed on a display device of the receiving device) may be updated to reflect a channel name indicated in the metadata, as indicated at 514. For example, channel names may be sent to devices from a graphical user interface running on a computing device during an initial setup for displaying on front panels of audio devices to indicate a type of data being sent to that device, a device that is sending data to that device, and/or other suitable information regarding data transfer to/from the device. Any of the displayed data may be transmitted via the metadata channel and used to update the display of the device. If the channel name or other information changes (e.g., automatically, due to changes in the network configuration, and/or due to user input requesting the change), such changes may be dynamically sent via the allocated metadata channel and used to update the display on the receiving device. In this way, the device may be continuously updated as the network changes. As another example, if a user moves a source selector on a wall controller to change the audio source from "DJ" to "Background Music," for example, the channel name may be changed with it, sent to the wall controller via metadata on the allocated metadata channel, and reflected on the wall controller.

As well as passing around the audio data, BLU link V2 may have the ability to carry other data (metadata). This data can include text to describe what is on the particular BLU link V2 audio channel ("channel naming") but may also carry other useful data. Other uses for this data can be the source IP address of the audio ("sending unit address"), distance from the sender, etc. This data channel may also be used for simple low bandwidth control of remote devices. By allocating a chunk of a BLU link V2 packet (or other daisy chain or ring network packet) that is available for a single device to transmit onto at any one time to allow metadata to be transmitted thereon, devices may be kept up to date with changes in the network by continuously receiving metadata in a designatcd/cxpected channel. In this way, data may be shared from one node with hundreds of other nodes on a network, without using too much bandwidth or causing bottlenecks, since the majority of the bandwidth on the network is still being used For the audio channels. Additionally, the synchronization and allocated metadata channel creates regular timing for data transfer, ensuring that the buffering in the FPGA may be calculated ahead of time and guaranteed to prevent buffer overflows and other issues. The way the meta channels arc allocated is very simple and elegant, making the coding of the sending and receiving portions of the FPGA code fairly straight forward. This relieves any host CPU in the system of any bandwidth calculations or timing calculation.

The methods and systems described above may provide an example network device in a daisy-chain or ring network comprising a network interface device, a processor, and a storage device storing instructions executable by the processor to allocate a channel in the network as a metadata channel, synchronize with each other device in the network, insert metadata into a metadata packet, and transmit the metadata packet on the allocated metadata channel alongside content transmitted on remaining channels of the network. In a first example, the network device may further include an audio device, and the daisy-chain or ring network may include one of an Audio/Video Bridging (AVB) network, a CobraNet network, or a DANTE network. A second example may optionally include the first example, and the network device wherein the daisy-chain or ring network comprises a BLU link V2 topology. A third example may optionally include one or both of the first and the second examples, and the network device wherein the metadata comprises one or more of control metadata, a channel name identifier, and a source IP address. A fourth example may optionally include any one or more of the first through the third examples, and the network device wherein the allocated metadata channel is t6 bytes wide. A fifth example may optionally include any one or more of the first through the fourth examples, and the network device wherein the content comprises one or more audio data frames, and wherein the instructions are further executable to transmit a metadata packet on the allocated metadata channel for each audio data frame that is transmitted on the remaining channels of the network. A sixth example may optionally include any one or more of the first through the fifth examples, and the network device wherein synchronizing with each other device in the network comprises notifying each other device in the network of an identifier of the allocated metadata channel. A seventh example may optionally include any one or more of the first through the sixth examples, and the network device where transmitting the metadata packet on the allocated metadata channel comprises transmitting metadata of a first type on the allocated metadata channel, the instructions further executable to transmit metadata of a second type on the allocated metadata channel responsive to a trigger. An eighth example may optionally include any one or more of the first through the seventh examples, and the network device wherein the first type of metadata comprises control metadata, and wherein the second type of metadata comprises a channel name identifier. A ninth example may optionally include any one or more of the first through the eighth examples, and the network device wherein the trigger comprises an expiration of a time period. A tenth example may optionally include any one or more of the first through the ninth examples, and the network device wherein the trigger comprises a change in one or more of a network configuration, a network status, and content transmitted alongside the metadata.

The methods and systems described above may provide an example network device in a daisy-chain or ring network comprising a network interface device, a processor, and a storage device storing instructions executable by the processor to synchronize with each other device in the network to receive an indication of an allocated metadata channel, receive a metadata packet on the allocated metadata channel, perform an action based on the received metadata packet. In a first example, the network device may include the network device wherein the metadata packet includes control metadata, and wherein the action comprises updating an operation of the network device based on the control metadata. A second example optionally includes the first example, and the network device further comprising a display device, wherein the metadata packet includes a channel name identifier, and wherein the action comprises updating a graphical user interface to display the channel name identifier on the display device. A third example optionally includes one or both of the first and the second examples, and the network device wherein the daisy-chain or ring network comprises one or more of an Audio/Video Bridging (AVB) network, a CobraNet network, and a DANTE network, and wherein the network device comprises an audio device.

The methods and systems described above may provide, on an audio device, an example method of transmitting metadata in a daisy-chain or ring audio network comprising allocating a channel in the audio network as a metadata channel, synchronizing with each other device in the audio network, transmitting a first metadata packet including a first type of metadata on the allocated metadata channel, transmitting a first frame of audio content on remaining channels of the audio network concurrently to transmitting the first metadata packet on the allocated metadata channel, detecting a trigger to change metadata transmission, transmitting a second metadata packet including a second type of metadata on the allocated metadata channel, and transmitting a second frame of audio content on the remaining channels of the audio network concurrently to transmitting the second metadata packet on the allocated metadata channel. In a first example, the method further comprises, responsive to transmitting the second metadata packet, transmitting a third metadata packet including the first type of metadata on the allocated metadata channel and transmitting a third frame of audio content on the remaining channels of the audio network concurrently to transmitting the third metadata packet on the allocated metadata channel. A second example optionally includes the first example, and the method wherein the trigger includes an expiration of a time period. A third example optionally includes one or both of the first and second examples, and the method wherein the trigger includes one or more of a change in network configuration, a change in network status, and a change in the audio content. A fourth example optionally includes any one or more of the first through the third examples, and the method wherein the first type of metadata comprises control metadata and the second type of metadata comprises one or more of a channel name identifier and a source IP address,

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as audio data source 202 and/or speakers 204a-204d of FIG. 2. The methods may be performed by executing stored instructions with one or more logic devices (e.g., processors) in combination with one or more additional hardware elements, such as storage devices, memory, hardware network interfaces/antennas, switches, actuators, clock circuits, etc. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and arc not intended to impose numerical requirements or a particular positional order on their objects. The following claims particularly point out subject matter from the above disclosure that is regarded as novel and non-obvious.

## Claims

1. A network device in a daisy-chain (200) or ring network, the network device comprising:
a network interface device (206a-206d);
a processor; and
a storage device;
**characterized in that**
the storage device storing instructions executable by the processor to:
allocate a channel in the network as a metadata channel;
synchronize with each other device in the network, wherein synchronizing with each other device in the network comprises notifying each other device in the network of an identifier of the allocated metadata channel;
insert metadata into a metadata packet, wherein the metadata packet includes a header identifying a type of the metadata as being at least one of a first type and a second, different type; and
transmit the metadata packet on the allocated metadata channel alongside content transmitted on remaining channels of the network.

2. The network device of claim 1, further comprising an audio device (204a-204d), and wherein the daisy-chain (200) or ring network comprises one of an Audio/Video Bridging "AVB" network, a CobraNet network, a DANTE network, and/or a BLU link V2 topology.

3. The network device of claim 1 or 2, wherein the header further identifies content data being transmitted; and/or wherein the type of metadata comprises one or more of control metadata, a channel name identifier, a source IP address, and/or wherein the allocated metadata channel is 16 bytes wide.

4. The network device of any of claims 1 to 3, wherein the content comprises one or more audio data frames, and wherein the instructions are further executable to transmit a metadata packet on the allocated metadata channel for each audio data frame that is transmitted on the remaining channels of the network.

5. The network device of any of claims 1 to 4, where transmitting the metadata packet on the allocated metadata channel comprises transmitting metadata of the first type on the allocated metadata channel, the instructions further executable to transmit metadata of the second type on the allocated metadata channel responsive to a trigger and/or wherein the first type of metadata comprises control metadata, and wherein the second type of metadata comprises a channel name identifier.

6. The network device of claim 5, wherein the trigger comprises an expiration of a time period and/or wherein the trigger comprises a change in one or more of a network configuration, a network status, and content transmitted alongside the metadata.

7. A network device in a daisy-chain (200) or ring network, the network device comprising:
a network interface device (206a-206d);
a processor; and
a storage device;
**characterized in that**
the storage device storing instructions executable by the processor to:
synchronize with each other device in the network to receive an indication of an allocated metadata channel;
receive a metadata packet on the allocated metadata channel, wherein the metadata packet includes a header identifying a type of the metadata as being at least one of a first type and a second, different type; and
perform an action based on the type of metadata indicated in the header of the received metadata packet.

8. The network device of claim 7, wherein the type of metadata includes at least one of control metadata, a channel name identifier, and a source IP address.

9. The network device of claim 7 or 8, wherein the metadata packet includes control metadata, and wherein the action comprises updating an operation of the network device based on the control metadata.

10. The network device of any one of claims 7 to 9, further comprising a display device, wherein the metadata packet includes a channel name identifier, and wherein the action comprises updating a graphical user interface to display the channel name identifier on the display device.

11. The network device of any one of claims 7 to 10, wherein the daisy-chain or ring network comprises one or more of an Audio/Video Bridging "AVB" network, a CobraNet network, and a DANTE network, and wherein the network device comprises an audio device (204a-204d).

12. On an audio device, a method of transmitting metadata in a daisy-chain or ring audio network, **characterized by** the method comprising:
allocating a channel in the audio network as a metadata channel;
synchronizing with each other device in the audio network, wherein synchronizing with each other device in the network comprises notifying each other device in the network of an identifier of the allocated metadata channel;
transmitting a first metadata packet including a first type of metadata on the allocated metadata channel;
transmitting a first frame of audio content on remaining channels of the audio network concurrently to transmitting the first metadata packet on the allocated metadata channel;
detecting a trigger for transmitting a second, different type of metadata;
transmitting a second metadata packet including the second type of metadata on the allocated metadata channel; and
transmitting a second frame of audio content on the remaining channels of the audio network concurrently to transmitting the second metadata packet on the allocated metadata channel.

13. The method of claim 12, further comprising, responsive to transmitting the second metadata packet, transmitting a third metadata packet including the first type of metadata on the allocated metadata channel and transmitting a third frame of audio content on the remaining channels of the audio network concurrently to transmitting the third metadata packet on the allocated metadata channel.

14. The method of claim 12 or 13, wherein the trigger includes an expiration of a time period and/or the trigger includes one or more of a change in network configuration, a change in network status, and a change in the audio content.

15. The method of any one of claims 12 to 14, wherein the first type of metadata comprises control metadata and the second type of metadata comprises one or more of a channel name identifier and a source IP address.

## Patentansprüche

1. Netzwerkgerät in einem verketteten (200) oder Ringnetzwerk, wobei das Netzwerkgerät Folgendes umfasst:
ein Netzwerkschnittstellengerät (206a-206d);
einen Prozessor; und
ein Speichergerät;
**dadurch gekennzeichnet, dass**
das Speichergerät Anweisungen speichert, die durch den Prozessor zu Folgendem ausführbar sind:
Zuweisen eines Kanals in dem Netzwerk als ein Metadatenkanal;
Synchronisieren mit jedem anderen Gerät in dem Netzwerk, wobei Synchronisieren mit jedem anderen Gerät in dem Netzwerk Benachrichtigen von jedem anderen Gerät in dem Netzwerk über einen Identifikator des zugewiesenen Metadatenkanals umfasst;
Einführen von Metadaten in ein Metadatenpaket, wobei das Metadatenpaket einen Header beinhaltet, der eine Art der Metadaten als mindestens eins von einer ersten Art und einer zweiten, unterschiedlichen Art identifiziert, und
Übertragen des Metadatenpakets auf dem zugewiesenen Metadatenkanal zusammen mit Inhalt, der auf den verbleibenden Kanälen des Netzwerks übertragen wird.

2. Netzwerkgerät nach Anspruch 1, das ferner ein Audiogerät (204a-204d) umfasst, und wobei das verkettete (200) oder Ringnetzwerk eines von einem Audio-/Video-Überbrückungsnetzwerk (audio/video bridging network - AVB-Netzwerk), einem CobraNet-Netzwerk, einem DANTE-Netzwerk und/oder einer BLU-Link-V2-Topologie umfasst.

3. Netzwerkgerät nach Anspruch 1 oder 2, wobei der Header ferner Inhaltsdaten identifiziert, die übertragen werden; und/oder wobei die Art von Metadaten ein oder mehrere von Steuerungsmetadaten, einem Kanalnamenidentifikator, einer Quellen-IP-Adresse umfasst, und/oder wobei der zugewiesene Metadatenkanal 16 Bytes breit ist.

4. Netzwerkgerät nach einem der Ansprüche 1 bis 3, wobei der Inhalt einen oder mehrere Audiodatenframes umfasst, und wobei die Anweisungen ferner dazu ausführbar sind, ein Metadatenpaket auf dem zugewiesenen Metadatenkanal für jeden Audiodatenframe zu übertragen, der auf den verbleibenden Kanälen des Netzwerks übertragen wird.

5. Netzwerkgerät nach einem der Ansprüche 1 bis 4, wobei Übertragen des Metadatenpakets auf dem zugewiesenen Metadatenkanal Übertragen der Metadaten der ersten Art auf dem zugewiesenen Metadatenkanal umfasst, wobei die Anweisungen ferner dazu ausführbar sind, Metadaten der zweiten Art auf dem zugewiesenen Metadatenkanal als Reaktion auf einen Auslöser zu übertragen und/oder wobei die erste Art von Metadaten Steuerungsmetadaten umfasst, und wobei die zweite Art von Metadaten einen Kanalnamenidentifikator umfasst.

6. Netzwerkgerät nach Anspruch 5, wobei der Auslöser ein Ablaufen eines Zeitraums umfasst und/oder wobei der Auslöser eine Änderung in einer oder mehreren einer Netzwerkkonfiguration, eines Netzwerkstatus und eines Inhalts, der entlang der Metadaten übertragen wird, umfasst.

7. Netzwerkgerät in einem verketteten (200) oder Ringnetzwerk, wobei das Netzwerkgerät Folgendes umfasst:
ein Netzwerkschnittstellengerät (206a-206d);
einen Prozessor; und
ein Speichergerät;
**dadurch gekennzeichnet, dass**
das Speichergerät Anweisungen speichert, die durch den Prozessor zu Folgendem ausführbar sind:
Synchronisieren mit jedem anderen Gerät in dem Netzwerk, um eine Angabe eines zugewiesenen Metadatenkanals zu empfangen;
Empfangen eines Metadatenpakets auf dem zugewiesenen Metadatenkanal, wobei das Metadatenpaket einen Header beinhaltet, der eine Art der Metadaten als mindestens eine einer ersten Art und einer zweiten, unterschiedlichen Art identifiziert; und
Durchführen einer Handlung auf Grundlage der Art von Metadaten, die in dem Header des empfangenen Metadatenpakets angegeben ist.

8. Netzwerkgerät nach Anspruch 7, wobei die Art von Metadaten mindestens eines von Steuerungsmetadaten, einem Kanalnamenidentifikator und einer Quellen-IP-Adresse beinhaltet.

9. Netzwerkgerät nach Anspruch 7 oder 8, wobei das Metadatenpaket Steuerungsmetadaten beinhaltet, und wobei die Handlung Aktualisieren eines Betriebs des Netzwerkgeräts auf Grundlage der Steuerungsmetadaten umfasst.

10. Netzwerkgerät nach einem der Ansprüche 7 bis 9, das ferner ein Anzeigegerät umfasst, wobei das Metadatenpaket einen Kanalnamenidentifikator umfasst und wobei die Handlung Aktualisieren einer grafischen Benutzerschnittstelle dazu umfasst, den Kanalnamenidentifikator an dem Anzeigegerät anzuzeigen.

11. Netzwerkgerät nach einem der Ansprüche 7 bis 10, wobei das verkettete oder Ringnetzwerk eines oder mehrere eines Audio-/Video-Überbrückungsnetzwerks (AVB-Netzwerks), eines CobraNet-Netzwerks und eines DANTE-Netzwerks umfasst, und wobei das Netzwerkgerät ein Audiogerät (204a-204d) umfasst.

12. An einem Audiogerät, Verfahren zum Übertragen von Metadaten in einem verketteten oder Ringaudionetzwerk, **dadurch gekennzeichnet, dass** das Verfahren Folgendes umfasst:
Zuweisen eines Kanals in dem Audionetzwerk als ein Metadatenkanal;
Synchronisieren mit jedem anderen Gerät in dem Audionetzwerk, wobei Synchronisieren mit jedem anderen Gerät in dem Netzwerk Benachrichtigen jedes anderen Geräts in dem Netzwerk über einen Identifikator des zugewiesenen Metadatenkanals umfasst;
Übertragen eines ersten Metadatenpakets, einschließlich einer ersten Art von Metadaten auf dem zugewiesenen Metadatenkanal;
Übertragen eines ersten Frames von Audioinhalt auf verbleibenden Kanälen des Audionetzwerks gleichzeitig mit Übertragen des ersten Metadatenpakets auf dem zugewiesenen Metadatenkanal;
Detektieren eines Auslösers zum Übertragen einer zweiten, unterschiedlichen Art von Metadaten;
Übertragen eines zweiten Metadatenpakets, einschließlich der zweiten Art von Metadaten auf dem zugewiesenen Metadatenkanal; und
Übertragen eines zweiten Frames von Audioinhalt auf den verbleibenden Kanälen des Audionetzwerks gleichzeitig mit Übertragen des zweiten Metadatenpakets auf den zugewiesenen Metadatenkanälen.

13. Verfahren nach Anspruch 12, das ferner als Reaktion auf Übertragen des zweiten Metadatenpakets Übertragen eines dritten Metadatenpakets einschließlich der ersten Art von Metadaten auf dem zugewiesenen Metadatenkanal und Übertragen eines dritten Frames von Audioinhalt auf den verbleibenden Kanälen des Audionetzwerks gleichzeitig mit Übertragen des dritten Metadatenpakets auf dem zugewiesenen Metadatenkanal umfasst.

14. Verfahren nach Anspruch 12 oder 13, wobei der Auslöser ein Ablaufen eines Zeitraums beinhaltet und/oder der Auslöser eines oder mehrere einer Änderung der Netzwerkkonfiguration, einer Änderung des Netzwerkstatus und einer Änderung des Audioinhalts beinhaltet.

15. Verfahren nach einem der Ansprüche 12 bis 14, wobei die erste Art von Metadaten Steuerungsmetadaten umfasst und die zweite Art von Metadaten eines oder mehrere von einem Kanalnamenidentifikator und einer Quellen-IP-Adresse umfasst.

## Revendications

1. Dispositif réseau dans un réseau en guirlande (200) ou en boucle, le dispositif réseau comprenant :
un dispositif d'interface réseau (206a à 206d) ;
un processeur ; et
un dispositif de stockage ;
**caractérisé en ce que**
le dispositif de stockage stockant des instructions exécutables par le processeur pour :
attribuer un canal dans le réseau en tant que canal de métadonnées ;
se synchroniser avec chaque autre dispositif dans le réseau, dans lequel la synchronisation avec chaque autre dispositif dans le réseau comprend la notification de chaque autre dispositif dans le réseau d'un identifiant du canal de métadonnées attribué ;
insérer des métadonnées dans un paquet de métadonnées, dans lequel le paquet de métadonnées inclut un en-tête identifiant un type des métadonnées comme étant au moins l'un d'un premier type et d'un second type différent ; et
transmettre le paquet de métadonnées sur le canal de métadonnées attribué conjointement avec du contenu transmis sur des canaux restants du réseau.

2. Dispositif réseau selon la revendication 1, comprenant en outre un dispositif audio (204a à 204d) et dans lequel le réseau en guirlande (200) ou en boucle comprend l'un d'un réseau de transition audio/vidéo « AVB », d'un réseau CobraNet, d'un réseau DANTE, et/ou d'une topologie BLU link V2.

3. Dispositif réseau selon la revendication 1 ou 2, dans lequel l'en-tête identifie en outre des données de contenu en cours de transmission ; et/ou dans lequel le type de métadonnées comprend un ou plusieurs éléments parmi des métadonnées de contrôle, un identifiant de nom de canal, une adresse IP source, et/ou dans lequel le canal de métadonnées attribué est large de 16 octets.

4. Dispositif réseau selon l'une quelconque des revendications 1 à 3, dans lequel le contenu comprend une ou plusieurs trames de données audio, et dans lequel les instructions sont en outre exécutables pour transmettre un paquet de métadonnées sur le canal de métadonnées attribué pour chaque trame de données audio qui est transmise sur les canaux restants du réseau.

5. Dispositif réseau selon l'une quelconque des revendications 1 à 4, dans lequel la transmission du paquet de métadonnées sur le canal de métadonnées attribué comprend la transmission de métadonnées du premier type sur le canal de métadonnées attribué, les instructions étant en outre exécutables pour transmettre des métadonnées du second type sur le canal de métadonnées attribué en réponse à un déclencheur et/ou dans lequel le premier type de métadonnées comprend des métadonnées de contrôle et dans lequel le second type de métadonnées comprend un identifiant de nom de canal.

6. Dispositif réseau selon la revendication 5, dans lequel le déclencheur comprend une expiration d'une durée et/ou dans lequel le déclencheur comprend une modification d'un ou de plusieurs éléments parmi une configuration de réseau, un état de réseau et un contenu transmis conjointement avec les métadonnées.

7. Dispositif réseau dans un réseau en guirlande (200) ou en boucle, le dispositif réseau comprenant :
un dispositif d'interface réseau (206a à 206d) ;
un processeur ; et
un dispositif de stockage ;
**caractérisé en ce que**
le dispositif de stockage stockant des instructions exécutables par le processeur pour :
se synchroniser avec chaque autre dispositif dans le réseau pour recevoir et indication d'un canal de métadonnées attribué ;
recevoir un paquet de métadonnées sur le canal de métadonnées attribué, dans lequel le paquet de métadonnées inclut un en-tête identifiant un type des métadonnées comme étant au moins l'un d'un premier type et d'un second type différent ; et
effectuer une action sur la base du type de métadonnées indiqué dans l'en-tête du paquet de métadonnées reçu.

8. Dispositif réseau selon la revendication 7, dans lequel le type de métadonnées inclut au moins un élément parmi des métadonnées de contrôle, un identifiant de nom de canal et une adresse IP source.

9. Dispositif réseau selon la revendication 7 ou 8, dans lequel le paquet de métadonnées inclut des métadonnées de contrôle, et dans lequel l'action comprend la mise à jour d'une opération du dispositif réseau sur la base des métadonnées de contrôle.

10. Dispositif réseau selon l'une quelconque des revendications 7 à 9, comprenant en outre un dispositif d'affichage, dans lequel le paquet de métadonnées inclut un identifiant de nom de canal, et dans lequel l'action comprend la mise à jour d'une interface utilisateur graphique pour afficher l'identifiant de nom de canal sur le dispositif d'affichage.

11. Dispositif réseau selon l'une quelconque des revendications 7 à 10, dans lequel le réseau en guirlande ou en boucle comprend un ou plusieurs éléments parmi un réseau de transition audio/vidéo « AVB », un réseau CobraNet, et un réseau DANTE, et dans lequel le dispositif réseau comprend un dispositif audio (204a à 204d).

12. Sur un dispositif audio, procédé de transmission de métadonnées dans un réseau audio en guirlande ou en boucle, **caractérisé par** le procédé comprenant :
l'attribution d'un canal dans le réseau audio en tant que canal de métadonnées ;
la synchronisation avec chaque autre dispositif dans le réseau audio, dans lequel la synchronisation avec chaque autre dispositif dans le réseau comprend la notification de chaque autre dispositif dans le réseau d'un identifiant du canal de métadonnées attribué ;
la transmission d'un premier paquet de métadonnées incluant un premier type de métadonnées sur le canal de métadonnées attribué ;
la transmission d'une première trame de contenu audio sur des canaux restants du réseau audio simultanément avec la transmission du premier paquet de métadonnées sur le canal de métadonnées attribué ;
la détection d'un déclencheur pour transmettre un second type différent de métadonnées ;
la transmission d'un deuxième paquet de métadonnées incluant le second type de métadonnées sur le canal de métadonnées attribué ; et
la transmission d'une deuxième trame de contenu audio sur les canaux restants du réseau audio simultanément avec la transmission du deuxième paquet de métadonnées sur le canal de métadonnées attribué.

13. Procédé selon la revendication 12, comprenant en outre, en réponse à la transmission du deuxième paquet de métadonnées, la transmission d'un troisième paquet de métadonnées incluant le premier type de métadonnées sur le canal de métadonnées attribué et la transmission d'une troisième trame de contenu audio sur les canaux restants du réseau audio simultanément avec la transmission du troisième paquet de métadonnées sur le canal de métadonnées attribué.

14. Procédé selon la revendication 12 ou 13, dans lequel le déclencheur inclut une expiration d'une durée et/ou le déclencheur inclut une ou plusieurs modifications parmi une modification de la configuration réseau, une modification de l'état de réseau et une modification du contenu audio.

15. Procédé selon l'une quelconque des revendications 12 à 14, dans lequel le premier type de métadonnées comprend des métadonnées de contrôle et le second type de métadonnées comprend un ou plusieurs éléments parmi un identifiant de nom de canal et une adresse IP source.
